Europäisches Patentamt

European Patent Office

Office européen des brevets

(11) Veröffentlichungsnummer: **0 478 877 A1**

## EUROPÄISCHE PATENTANMELDUNG

(21) Anmeldenummer: **91103909.7**

(22) Anmeldetag: **14.03.91**

(51) Int. Cl.5: **F16B 7/18**, F16B 7/04, F16B 37/04

(30) Priorität: **04.10.90 DE 9013802 U**

(43) Veröffentlichungstag der Anmeldung:
**08.04.92 Patentblatt 92/15**

(84) Benannte Vertragsstaaten:
**AT BE CH DE DK ES FR GB GR IT LI LU NL SE**

(71) Anmelder: **RK-Rose + Krieger GmbH & Co.
Kommanditgesellschaft Verbindungs- und
Positioniersysteme
Flurweg 1**
**W-4952 Porta Westfalica(DE)**

(72) Erfinder: **Jost, Peter
Parkstrasse 5
W-3260 Rinteln(DE)**

(74) Vertreter: **Stracke, Alexander, Dipl.-Ing. et al
Patentanwälte Dipl.-Ing. Loesenbeck
Dipl.-Ing. Stracke Jöllenbecker Strasse 164
Postfach 5605
W-4800 Bielefeld 1(DE)**

(54) Vorrichtung zum lösbaren Verbinden zweier Profilstäbe.

(57) 2.1. Es sind Vorrichtungen bekannt, die einen Nutstein aufweisen, der in einer Längsnut eines Profilstabes hintergreifend geführt ist und der mit einem Flansch verbunden ist, der an der Stirnseite eines zweiten Profilstabes mittels einer Schraube befestigt ist. Nachteilig bei diesen Vorrichtungen ist, daß sie aus einer Vielzahl von Teilen bestehen, die naturgemäß erhebliche Herstellungs- und Montagekosten zur Folge haben. Mit Hilfe der neuen Vorrichtung sollen die Herstellungs- und Montagekosten gesenkt werden.

2.2. Dazu ist nach der Erfindung vorgesehen, daß die Schraube (4), mit der der Flansch an der Stirnseite des ersten Profilstabes (1) festgelegt ist, in die mittig in Achsrichtung verlaufende Innenkammer (12) eingedreht ist. Weiter ist der Flansch (3) auf seiner dem ersten Profilstab (1) zugewandten Seite, der Schraube (4) benachbart mit mindestens einer Rastnase (5) versehen, die in eine neben der Innenkammer (12) angeordneten Ausnehmung (14) formschlüssig eingreift.

2.3. Nunmehr ist es möglich, ohne Vorarbeiten, wie Gewindeschneiden, den Flansch am ersten Profilstab festzulegen, wobei sinnvoller Weise die Schraube als selbstschneidende Schraube vorzusehen ist. Durch die Rastnasen ist eine gleichzeitige Verdrehsicherung und Zwangsausrichtung des Flansches gewährleistet. Da die Vorrichtung aus nur wenigen Teilen besteht, die überdies noch einfach zu montieren sind, werden sowohl die Herstellungs- als auch die Montagekosten sehr gering gehalten.

Fig. 1

Die vorliegende Erfindung betrifft eine Vorrichtung zum lösbaren Verbinden zweier Profilstäbe entsprechend dem Oberbegriff des Anspruchs 1.

Aus der DE-OS 36 04 989 ist eine solche Vorrichtung bekannt.

Diese hat sich grundsätzlich in der Praxis bewährt. Jedoch sind insbesondere hinsichtlich ihrer Herstellung einige Nachteile zu beklagen.

Da eine Vielzahl von Teilen erforderlich ist, die dazu nötig sind, den Flansch am ersten Profilstab festzulegen, sind die Herstellungskosten dieser Vorrichtung relativ hoch und stehen somit einer optimalen wirtschaftlichen Fertigung entgegen.

Gleichfalls bedingt durch die Vielzahl der einzelnen Teile wird auch die Montage der gesamten Vorrichtung erschwert,was sich gleichfalls als nachteilig hinsichtlich einer kostengünstigen Verwendung darstellt.

Die Aufgabe der Erfindung ist es daher, eine Vorrichtung der gattungsgemäßen Art zu schaffen, die kostengünstiger herstell- und montierbar ist. Diese Aufgabe wird erfindungsgemäß durch die im kennzeichnenden Teil des Anspruchs 1 genannten Merkmale gelöst.

Grundsätzlich ist es jetzt möglich, ohne Vorarbeiten den Flansch am ersten Profilstab festzulegen, wobei es sinnvoll ist, als Schraube, die in die Innenkammer eingeschraubt wird, eine selbstschneidende vorzusehen, so daß es nicht erforderlich ist, in die Innenkammer in einem zusätzlichen Arbeitsgang ein Gewinde zu schneiden. Die Verwendung einer selbstschneidenden Schraube ist auch deshalb unproblematisch, weil es üblich ist, als Profilstäbe stranggepreßte Leichtmetallprofile einzusetzen, während die Schraube aus Stahl besteht.

Um ein Gewinde in die Innenkammer eindrehen zu können, sei es ausschließlich durch die Schraube selbst, oder sei es durch einen Gewindeschneider, ist es selbstverständlich notwendig, daß der lichte Durchmesser der Innenkammer etwa dem Kernlochdurchmesser eines der Schraube zugeordneten Muttergewindes entspricht.

Eine Verdrehsicherung und gleichzeitige Zwangsausrichtung des Flansches ist durch die Rastnasen gewährleistet, die in jeweils eine neben der Innenkammer angeordnete Ausnehmung formschlüssig eingreifen.

Dabei können die Rastnasen sich gegenüberliegend auf der Längsachse des Flansches angeordnet sein, sie können aber auch quer dazu sich gegenüberliegen.

Die durch die Rastnase erstrebte Wirkung wird aber auch dann erzielt, wenn lediglich eine vorgesehen ist, wobei eine zwangsweise Ausrichtung des Flansches dadurch erleichtert wird, daß im Regelfall symmetrische Profilstäbe eingesetzt werden.

Da die Vorrichtung als Serienartikel in einer großen Stückzahl hergestellt wird, der Flansch daher zweckmäßigerweise als Gußteil ausgebildet wird, können die Rastnasen angeformt werden, so daß keinerlei mechanische Nachbearbeitung erforderlich ist.

Vorteilhafte Ausgestaltungen der Erfindung sind in den Unteransprüchen gekennzeichnet.

Ein Ausführungsbeispiel der Erfindung wird nachfolgend anhand von Zeichnungen beschrieben.

Es zeigen:

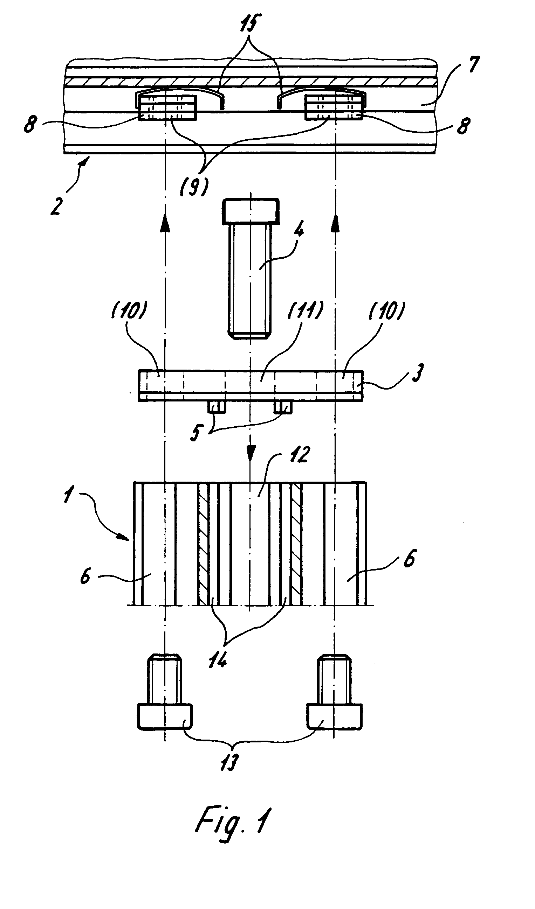

Fig. 1     die erfindungsgemäße Vorrichtung in einem Längsschnitt in Explosivdarstellung,

Fig. 2     eine Draufsicht auf zwei miteinander verbundene Profilstäbe,

Fig. 3     eine Seitenansicht auf die Vorrichtung gemäß der Linie III-III in Figur 2,

Fig. 4     einen Längsschnitt durch die Vorrichtung gemäß der Linie IV-IV in Figur 2.

Eine in den Figuren dargestellte Vorrichtung zum lösbaren Verbinden zweier Profilstäbe 1, 2 besteht in ihrem Grundaufbau aus einem Flansch 3, der mit einer Schraube 4 an einem ersten Profilstab 1 festgeschraubt ist, sowie mindestens einem, im vorliegenden Ausführungsbeispiel zwei Nutsteinen 8, die über Schrauben 13 mit dem Flansch 3 verschraubt sind.

Der erste Profilstab 1, der mit sich gegenüberliegenden, in Längsachsrichtung sich erstreckenden Längsnuten 6 versehen ist, wird durch die Vorrichtung mit dem zweiten Profilstab 2 verbunden, wobei der Nutstein bzw. die Nutsteine 8 in einer dem ersten Profilstab 1 zugewandten hinterschnittenen Längsnut 7 einliegen. Der erste Profilstab 1 weist eine konzentrisch angeordnete Innenkammer 12 auf, in die die Schraube 4 eingedreht ist. Dabei liegt der Flansch 3 stirnseitig an den ersten Profilstab 1 an, während sich die Schraube 4 mit ihrem Kopf an der Unterseite des Flansches 3 abstützt.

Die Schraube 4 ist durch eine Durchgangsbohrung 11 des Flansches 3 geführt.

Dieser Durchgangsbohrung 11 bzw. der Innenkammer 12 benachbart sind Rastnasen 5, die auf der dem ersten Profilstab 1 zugewandten Seite des Flansches 3 angeordnet sind und formschlüssig in Ausnehmungen 14 des ersten Profilstabes 1 eingreifen.

Neben der in dem beschriebenen Ausführungsbeispiel dargestellten Möglichkeit, eine Zylinderkopfschraube zu verwenden, ist es auch denkbar, den Flansch 3 mit einer Senkkopfschraube am ersten Profilstab festzulegen, wobei dann auf der den Rastnasen 5 gegenüberliegenden Seite des Flansches 3 eine entsprechende Senkung vorzusehen ist. Durch Schrauben 13, die in den Längsnuten 6 des ersten Profilstabes einliegen und die Durchgangsbohrungen 10 des Flansches 3 durchtreten, sind die Nutsteine 8, die Gewindebohrungen 9 aufweisen, mit dem Flansch 3 verbunden.

Zur besseren Positionierung der Nutsteine 8 sind diese jeweils mit einem Federbügel 15 versehen, die sich am Grund der Längsnut 7 abstützen. Jeder Federbügel ist so abgewinkelt, daß er am Kopf der Schraube 4 anschlägt, wobei die Länge des Federbügels so gehalten ist, daß bei einem Anschlagen an den Kopf der Schraube 4 die Mittelachse der Gewindebohrung 9 des Nutsteines 8 mit der der Durchgangsbohrung 10 und der Schraube 13 fluchtet.

Da vor dem Aufsetzen des ersten Profilstabes 1 auf den zweiten Profilstab 2 der Flansch 3 mittels der Schraube 4 an der Stirnseite des ersten Profilstabes 1 festgeschraubt ist, ragt nach dem Aufsetzen der Kopf der Schraube 4 in die Längsnut 7 des zweiten Profilstabes 2. Die Nutsteine 8 können jeweils seitlich entlang der Längsnut 7 soweit eingeschoben werden, bis sie am Kopf der Schraube 4 anschlagen.

Wie beschrieben, ist dann eine genaue Position des Nutsteines 8 gegeben, so daß dieser bequem mit dem Flansch 3 verschraubt werden kann.

Neben der in dem dargestellten Ausführungsbeispiel gezeigten Form des Nutsteines 8 sind selbstverständlich auch andere Ausgestaltungen denkbar, wobei diese zum Teil abhängig sind von der Form der Schraube 4 bzw. der Form ihres Kopfes.

In jedem Fall ist es jedoch sinnvoll, den Nutstein 8 mit einer Feder, die sich am Grund der Längsnut abstützt, zu belasten, so daß er sich im hinterschnittenen Bereich der Längsnut 7 abstützen kann und so durch einen gewissen Reibschluß gegen ein Verrutschen bei der Montage gesichert ist.

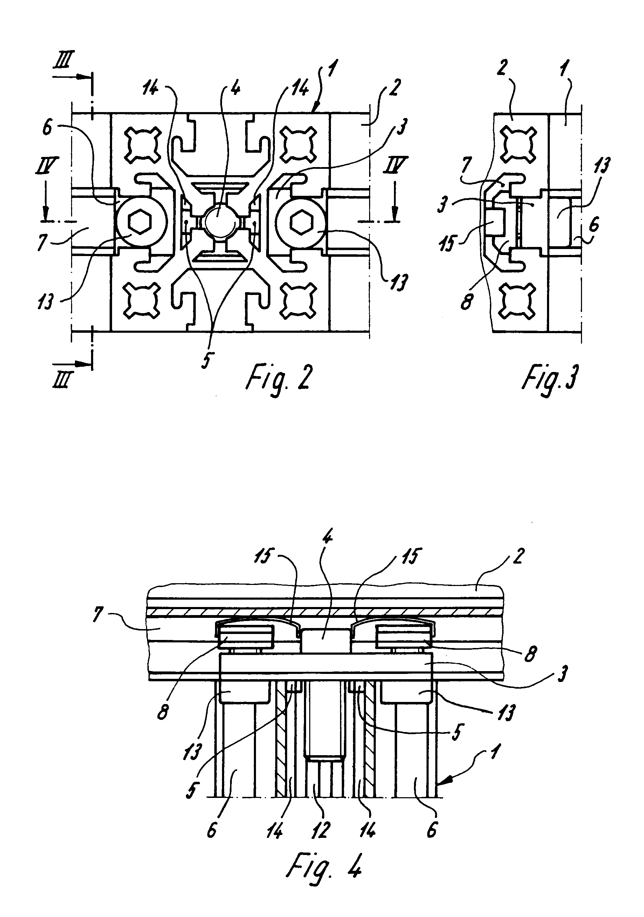

Wie besonders deutlich die Figur 2 zeigt, sind die Rastnasen 5 im Querschnitt T-förmig ausgebildet, wobei der Mittenschenkel in die Richtung der Schraube 4 weist.

Die Ausnehmung 14, die als sich über die gesamte Länge des Profilstabes 1 erstreckende Nut ausgebildet sein kann, ist dem Querschnitt der Rastnase 5 soweit angepaßt, daß ein Formschluß möglich ist.

Die Höhe der Rastnase 5 sowie deren Querschnittsabmessungen können so ausgelegt sein, daß die jeweilige Rastnase 5 durchaus auch auftretende, auf den ersten Profilstab einwirkende Belastungen aufnehmen kann.

Anstelle der beschriebenen zwei Nutsteine 8 kann bei einer weiteren Ausführungsvariante lediglich ein Nutstein vorgesehen sein, wobei dann eine Vormontage der gesamten Vorrichtung möglich ist. Bei Verwendung einer Zylinderkopfschraube als Schraube 4 ist dann eine entsprechende Ausnehmung im Nutstein vorzusehen, in die der Schraubenkopf ragt.

**Patentansprüche**

1. Vorrichtung zum lösbaren Verbinden zweier Profilstäbe, vorzugsweise aus Leichtmetall, von denen ein erster mit einer sich in Längsachsrichtung erstreckenden Innenkammer versehener Profilstab stirnseitig an einer Längsseite des zweiten Profilstabes anliegt, wobei ein in einer hinterschnittenen Längsnut des zweiten Profilstabes geführter und die Längsnut hintergreifender Nutstein mit einem Flansch verbunden ist, der an der Stirnseite des ersten Profilstabes mittels einer Schraube festgelegt ist, **dadurch gekennzeichnet**, daß die Schraube (4) in die Innenkammer (12) eingedreht ist und daß auf der den ersten Profilstab (1) zugewandten Seite des Flansches (3), der Schraube (4) benachbart, mindestens eine Rastnase (5) vorgesehen ist, die in eine neben der Innenkammer (12) angeordnete Ausnehmung (14) formschlüssig eingreift.

2. Vorrichtung nach Anspruch 1, dadurch gekennzeichnet, daß die Rastnasen 5 an den Flansch (3) angeformt sind.

3. Vorrichtung nach Anspruch 1, dadurch gekennzeichnet, daß zwei sich gegenüberliegende Nutsteine (8) vorgesehen sind, die jeweils einen Federbügel (15) aufweisen, die sich am Grund der Längsnut (7) abstützen.

4. Vorrichtung nach Anspruch 3, dadurch gekennzeichnet, daß in montierter Stellung die Federbügel (15) am Kopf der Schraube (4) anschlagen.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-9 006 344 (BAHR)<br>* Seite 4, Zeile 25 - Seite 5, Zeile 6 *<br>* Seite 6, Zeile 21 - Zeile 26; Ansprüche 1,4,8; Abbildungen 1-3 * *<br>– – – | 1-4 | F 16 B 7/18<br>F 16 B 7/04<br>F 16 B 37/04 |
| A | DE-A-3 829 306 (PRETTL)<br>* Seite 7, Zeile 11 - Seite 8, Zeile 47; Abbildungen 1-6 * *<br>– – – | 1 | |
| A | DE-A-1 775 246 (NIEDAX)<br>* Anspruch 3; Abbildungen 1,4 * *<br>– – – | 3 | |
| D,A | DE-A-3 604 989 (RK, ROSE + KRIEGER GMBH & CO KG)<br>* Zusammenfassung; Abbildungen 1,2 * *<br>– – – – – | 1 | |

| RECHERCHIERTE SACHGEBIETE (Int. Cl.5) |
|---|
| F 16 B<br>E 04 B<br>E 06 B |

Der vorliegende Recherchenbericht wurde für alle Patentansprüche erstellt

| Recherchenort | Abschlußdatum der Recherche | Prüfer |
|---|---|---|
| Den Haag | 12 Dezember 91 | CALAMIDA G. |